# EUROPEAN PATENT APPLICATION

(11) **EP 3 480 045 A1**
(43) Date of publication of application: **08.05.2019**
(21) Application number: 17818954.4
(22) Date of filing: 11.05.2017
(51) Int. Cl.: B60K 6/36, B60K 17/08

(54) **POWER DRIVE SYSTEM AND VEHICLE**

(30) Priority: 29.06.2016 CN 201610494212
(71) Applicant: BYD Company Limited, Shenzhen, Guangdong 518118 (CN)
(72) Inventor: LIU, Jing, Shenzhen Guangdong 518118 (CN); HUA, Yu, Shenzhen Guangdong 518118 (CN); CHAI, Lingdao, Shenzhen Guangdong 518118 (CN)
(74) Representative: Hoffmann Eitle
(86) International application number: PCT/CN2017/084022
(87) International publication number: WO 2018/000957

(57) **Abstract**

The present disclosure provides a power drive system and a vehicle. The power drive system includes: an engine; a plurality of input shafts, the engine is arranged to be selectively engaged with at least one of the plurality of input shafts, and each input shaft is provided with a plurality of gear driving gears; and a plurality of output shafts, each output shaft is provided with a plurality of gear driven gears, the plurality of gear driven gears and the plurality of gear driving gears are correspondingly meshed, a reverse gear output gear is idly mounted on one of the plurality of output shafts, and the one of the plurality of output shafts is further provided with a reverse gear synchronizer used for being engaged with the reverse gear output gear, one side of one of the plurality of gear driven gears is provided with a gear portion to form a duplicate gear, and the reverse gear output gear is meshed with the gear portion.

## Description

### FIELD

The present disclosure relates to the technical field of automobiles, and more particularly relates to a power drive system and a vehicle.

### BACKGROUND

Along with unceasing consumption of energy, development and application of new energy automobiles have gradually become a tendency. A hybrid electric vehicle, serving as one of the new energy automobiles, is driven through an engine and/or a motor, and has various modes, and transmission efficiency and fuel economy may be improved.

However, in the related technology known by the inventor, a transmission in the hybrid electric vehicle is generally complicated in structure, few in transmission mode and low in transmission efficiency. In addition, a transmission in a traditional hybrid electric vehicle is mostly in five gears or six gears, and the transmission efficiency is low.

### SUMMARY

The present disclosure aims at resolving one of the above technical problems in the prior art to some extent. For this purpose, one objective of the present disclosure is to provide a power drive system, and the power drive system is rich in transmission mode and has a plurality of (such as seven) forward gears, which can better meet requirements for power and torque during vehicle driving.

The other objective of the present disclosure is to provide a vehicle, and the vehicle includes the above power drive system.

The power drive system according to the embodiment of the present disclosure, includes: an engine; a plurality of input shafts, the engine is arranged to be selectively engaged with at least one of the plurality of input shafts, and each input shaft is provided with a plurality of gear driving gears; and a plurality of output shafts, each output shaft is provided with a plurality of gear driven gears, the plurality of gear driven gears and the plurality of gear driving gears are correspondingly meshed, a reverse gear output gear is idly mounted on one of the plurality of output shafts, and the one of the plurality of output shafts is further provided with a reverse gear synchronizer used for being engaged with the reverse gear output gear, one side of one gear driven gear of the plurality of gear driven gears is provided with a gear portion to form a duplicate gear, and the reverse gear output gear is meshed with the gear portion.

The power drive system according to the embodiment of the present disclosure has a plurality of (such as seven) forward gears, which makes power transmission be more smooth and transmission efficiency be high, and a plurality of (such as seven) different transmission speed ratios can better meet requirements for power and torque of vehicles under different road conditions.

In addition, the power drive system according to the embodiment of the present disclosure may further has the following additional technical characteristics that:

According to some embodiments of the present disclosure, the plurality of input shafts includes: a first input shaft and a second input shaft, the second input shaft is sleeved over the first input shaft; the plurality of output shafts includes: a first output shaft and a second output shaft; the first input shaft is fixedly provided with a first-gear driving gear, a third- and fifth-gear driving gear and a seventh-gear driving gear, and the second input shaft is fixedly provided with a second-gear driving gear and a fourth- and sixth-gear driving gear; a first-gear driven gear, a second-gear driven gear, a third-gear driven gear and a fourth-gear driven gear are idly mounted on the first output shaft, and a fifth-gear driven gear, a sixth-gear driven gear and a seventh-gear driven gear are idly mounted on the second output shaft; a first- and third-gear synchronizer is arranged between the first-gear driven gear and the third-gear driven gear, a second- and fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged on one side of the sixth-gear driven gear.

According to some embodiments of the present disclosure, the reverse gear output gear is idly mounted on the second output shaft and is adjacent to the sixth-gear driven gear, and shares the sixth-gear synchronizer with the sixth-gear driven gear, and therefore the sixth-gear synchronizer forms the reverse gear synchronizer.

According to some embodiments of the present disclosure, the first output shaft is fixedly provided with a first-output-shaft output gear, the second output shaft is fixedly provided with a second-output-shaft output gear, and the first-output-shaft output gear and the second-output-shaft output gear are both meshed with a main reducer driven gear of the vehicle.

According to some embodiments of the present disclosure, the power drive system further includes: a double clutch, the double clutch has an input end, a first output end and a second output end, the engine is connected with the input end, the first output end is connected with the first input shaft, and the second output end is connected with the second input shaft.

According to some embodiments of the present disclosure, the gear portion is arranged on one side of the second-gear driven gear so as to form the duplicate gear.

According to some embodiments of the present disclosure, the reverse gear output gear shares a gear synchronizer with one gear driven gear, adjacent to the reverse gear output gear, in the plurality of gear driven gears, and the shared gear synchronizer forms the reverse gear synchronizer.

According to some embodiments of the present disclosure, distances between the second-gear driving gear, the fourth- and sixth-gear driving gear, the third- and fifth-gear driving gear, the first-gear driving gear and the seventh-gear driving gear and the engine are progressively increased.

According to some embodiments of the present disclosure, the power drive system further includes: a motor power shaft, a motor-power-shaft first gear and a motor-power-shaft second gear are idly mounted on the motor power shaft, a motor power shaft synchronizer located between the motor-power-shaft first gear and the motor-power-shaft second gear is further arranged on the motor power shaft, where the motor-power-shaft second gear is arranged to be in linkage with one gear driven gear in the plurality of gear driven gears; and a first motor generator, the first motor generator is arranged to be in linkage with the motor power shaft.

The vehicle according to the embodiment of the present disclosure includes the power drive system of the above embodiment.

### BRIEF DESCRIPTION OF THE DRAWINGS

FIG. 1 is a schematic view of a power drive system according to an embodiment of the present disclosure;
FIG. 2 is a schematic view of a power drive system according to another embodiment of the present disclosure;
FIG. 3 is a schematic view of a power drive system according to still another embodiment of the present disclosure;
FIG. 4 is a schematic view of a power drive system according to further another embodiment of the present disclosure; and
FIG. 5 is a schematic view of a power drive system according to further another embodiment of the present disclosure.

### DETAILED DESCRIPTION

The embodiments of the present disclosure are described in detail below. Examples of the embodiments are illustrated in the accompanying drawings. Same or like reference numerals throughout the specification denote same or like components or components having same or like functions. The embodiments described below with reference to the accompanying drawings are exemplary, and are used for explaining rather than limiting the present disclosure.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", and "counterclockwise" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In addition, the terms such as "first" and "second" are used only for the purpose of description, and should not be understood as indicating or implying the relative importance or implicitly specifying the number of the indicated technical features. Therefore, a feature defined by "first" or "second" can explicitly or implicitly include one or more of said features. In the description of the present disclosure, "a plurality of' means at least two, such as two and three, unless otherwise definitely defined.

In the present disclosure, unless otherwise definitely stipulated and defined, terms such as "install", "mutual connection", "connect" and "fix" should be understood generally, for example, it may be fixed connection, may also be detachable connection, or be integrated; it may be mechanical connection, and may also be electrical connection or may be mutual communication; and it may be direct connection, may also be indirect connection through intermedia, and may be communication between interiors of two elements or an interaction relationship of the two elements. Persons of ordinary skill in the art may understand the specific meanings of the foregoing terms in this application according to specific situations.

In the present invention, unless otherwise explicitly specified or defined, a first feature being "above" or "under" a second feature may include that the first and second features are in direct contact and may also include that the first and second features are not in direct contact but are in contact by means of another feature therebetween. In addition, the first feature being "over", "above" or "on the top of' a second feature may include that the first feature is over or above the second feature or merely indicates that the horizontal height of the first feature is higher than that of the second feature. The first feature being "underneath", "below" or "on the bottom of' a second feature may include that the first feature is underneath or below the second feature or merely indicates that the horizontal height of the first feature is lower than that of the second feature.

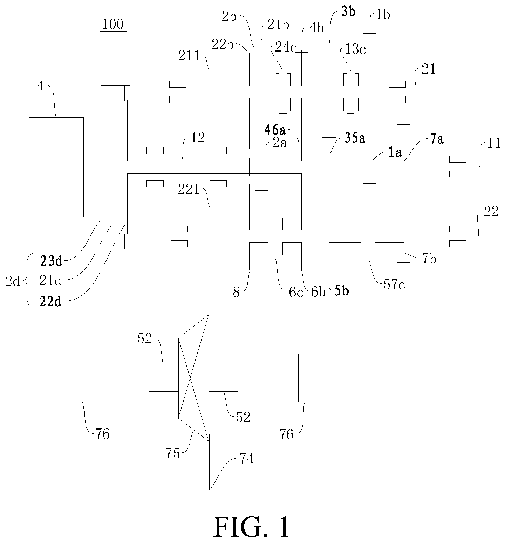

A power drive system 100 according to embodiments of the present disclosure is described in detail in combination with FIG. 1 to FIG. 5. The power drive system 100 is applicable to vehicles such as a hybrid electric vehicle, and provides sufficient power and electric energy for normal driving of the vehicle as a power system of the vehicle.

The power drive system 100 according to the embodiment of the present disclosure mainly includes two major parts, one part may be a power source which may include an engine 4, a motor generator and the like, the other part may be a transmission (including a plurality of input shafts, a plurality of output shafts, a gear gear pair and the like), and the transmission is used for achieving a speed changing function for power output by a power source, and meets a vehicle driving requirement or a charging requirement or the like.

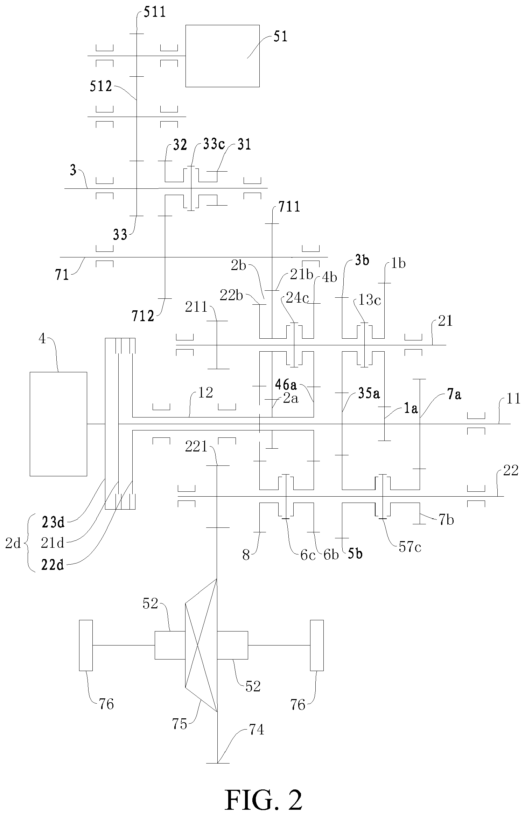

For example, in some embodiments, as shown in FIG. 2 to FIG. 5, the power drive system 100 may include an engine 4, a first motor generator 51 and a transmission, but is not limited herein.

In combination with what is shown in FIG. 2 to FIG. 5, in some embodiments, the transmission mainly includes a plurality of input shafts (such as, a first input shaft 11 and a second input shaft 12), a plurality of output shafts (such as, a first output shaft 21 and a second output shaft 22), a motor power shaft 3 and related gears and gear shifting elements (such as a synchronizer) on the various shafts.

When power transmission is performed between the engine 4 and the input shaft, the engine 4 is arranged to be selectively engaged with at least one of the plurality of input shafts. In other words, for example, when the engine 4 transmits power towards the input shaft, the engine 4 can be selectively engaged with one of the plurality of input shafts to transmit power, or the engine 4 can also be selectively engaged with two or more input shafts in the plurality of input shafts at the same time to transmit power.

For example, in examples of FIG. 1 to FIG. 5, the plurality of input shafts may include a first input shaft 11 and a second input shaft 12, and the engine 4 can be selectively engaged with one of the first input shaft 11 and the second input shaft 12 to transmit power. Or, the engine 4 can also be engaged with the first input shaft 11 and the second input shaft 12 at the same time to transmit power. Of course, what should be understood is that, the engine 4 may also be disconnected from the first input shaft 11 and the second input shaft 12 at the same time.

For those skilled in the art, a jointing state between the engine 4 and the input shaft is related to a specific work condition of the power drive system 100, which is about to be described in detail below in combination with the specific embodiments, and is not described in detail any more herein.

Power transmission may be performed between the input shaft and the output shaft through the gear gear pair. For example, each input shaft is provided with a plurality of gear driving gears, each output shaft is provided with a plurality of gear driven gears, the plurality of gear driven gears are correspondingly meshed with the plurality of gear driving gears, therefore forming a plurality of pairs of gear pair with different speed ratios.

In some embodiments of the present disclosure, the power drive system 100 may have seven forward-gear gear pairs, namely, a first-gear gear pair, a second-gear gear pair, a third-gear gear pair, a fourth-gear gear pair, a fifth-gear gear pair, a sixth-gear gear pair and a seventh-gear gear pair.

As shown in FIG. 1 to FIG. 5, a reverse gear output gear 8 is idly mounted on one of the output shaft and the output shaft is further provided with a reverse gear synchronizer (such as a sixth-gear synchronizer 6c of FIG. 1) used for being engaged with the reverse gear output gear 8. In other words, the reverse gear synchronizer synchronizes the reverse gear output gear 8 and the corresponding output shaft, and therefore the output shaft and the reverse gear output gear 8 are in linkage, and then reverse gear power can be output through the output shaft.

In some embodiments, as shown in FIG. 1 to FIG. 5, the number of the reverse gear output gear 8 is one, the reverse gear output gear 8 may be idly mounted on the second output shaft 22, and the reverse gear synchronizer may be the sixth-gear synchronizer 6c (namely, a gear synchronizer).

The reverse gear output gear 8 is in linkage with one gear driven gear and is opposite to the gear driven gear in rotating direction, thus a reverse gear shaft is omitted, and the power drive system 100 is more compact in structure, smaller in radial size and convenient to arrange. In some embodiments of the present disclosure, a gear portion is arranged on one side of one gear driven gear to form a duplicate gear, and the reverse gear output gear is meshed with the gear portion. For example, in examples of FIG. 1 to FIG. 5, a second-gear driven gear 2b is a duplicate gear, and has a gear portion 21b and a gear portion 22b, the gear portion 21b serves as a traditional driven gear, that is, the gear portion 21b is meshed with a second-gear driving gear 2a, and the gear portion 22b is connected to one side of the gear portion 21b, and is meshed with the reverse gear output gear 8. Due to the fact that the gear driven gear is arranged into the duplicate gear, and the reverse gear output gear 8 and one gear portion of the duplicate gear are in meshing transmission, the tooth number of the gear portion may be independently designed, and therefore an optimal reverse gear transmission speed ratio is acquired.

What needs to be explained is that, the above "linkage" may be understood as correlated motion of a plurality of parts (such as, two), and with two parts being in linkage as an example, when one part moves, the other par will also move accordingly.

For example, in some embodiments of the present disclosure, linkage of a gear and a shaft can be understood as that when the gear rotates, the shaft in linkage with the gear will also rotate, or when the shaft rotates, the gear in linkage with the shaft will also rotate.

For another example, linkage between a shaft and another shaft can be understood as that when one shaft rotates, the other shaft in linkage with the shaft will also rotate.

For still another example, linkages between a gear and another gear can be understood as that when one gear rotates, the other gear in linkage with the gear will also rotate.

The description related to "linkage" below in the present disclosure is all understood in this way unless otherwise specially illustrated.

As shown in FIG. 1 to FIG. 5, the reverse gear output gear 8 is idly mounted on the output shaft, and therefore if the reverse gear power transmitted to the reverse gear output gear 8 needs to be output by the output shaft where the reverse gear output gear 8 is idly mounted, the reverse gear synchronizer (such as the sixth-gear synchronizer 6c) needs to be arranged to synchronize the reverse gear output gear 8 and the corresponding output shaft. In some embodiments of the present disclosure, the reverse gear output gear 8 and one adjacent gear driven gear (such as the sixth-gear driven gear 6b) share the gear synchronizer (such as the sixth-gear synchronizer 6c). In other words, for the gear driven gear arranged on the same output shaft with the reverse gear output gear 8, because the gear driven gear is also idly mounted on the output shaft and needs the gear synchronizer to synchronize the gear driven gear with the output shaft to output power, the reverse gear output gear 8 may be arranged adjacent to the gear driven gear, and the reverse gear output gear 8 and the gear driven gear share the gear synchronizer, an engagement sheath of the shared gear synchronizer may be jointed to the reverse gear output gear 8 or the corresponding gear driven gear when moved leftwards or rightwards along the output shaft.

Thus, the number of the synchronizer and the number of a shifting yoke mechanism may be reduced, so that the power drive system 100 is relatively smaller in axial size and radial size, more compact in structure and more convenient to control, and the cost is lowered.

Of course, what may be understood is that, the reverse gear synchronizer in the embodiments of the present disclosure may also be an independent synchronizer independent from other gear synchronizers.

Specific embodiments for the gear synchronizer to form the reverse gear synchronizer will be described in detail below in combination with the accompanying drawings, and is not illustrated in detail any more herein.

The motor power shaft 3 is described in derail below. As shown in FIG. 2 to FIG. 5, a motor-power-shaft first gear 31 and a motor-power-shaft second gear 32 are idly mounted on the motor power shaft 3. The motor-power-shaft first gear 31 and a main reducer driven gear 74 may be in meshing transmission.

The motor-power-shaft second gear 32 is arranged to be in linkage with one gear driven gear, when a vehicle with the power drive system 100 according to the embodiments of the present disclosure is in a certain work condition (the specific work condition will be described in detail below in combination with the specific embodiments), power output by the power source may be transmitted between the motor-power-shaft second gear 32 and the gear driven gear in linkage with the motor-power-shaft second gear 32, and at the moment, the motor-power-shaft second gear 32 is in linkage with the gear driven gear.

For example, in some embodiments, the motor-power-shaft second gear 32 may be in linkage with a first-gear driven gear 1b, a second-gear driven gear 2b, a third-gear driven gear 3b or a fourth-gear driven gear 4b respectively. With FIG. 2 to FIG. 5 as an example, the motor-power-shaft second gear 32 and the second-gear driven gear 2b may be directly meshed or perform indirect transmission through an intermediate transmission part, which will be described in detail below in combination with the specific embodiments.

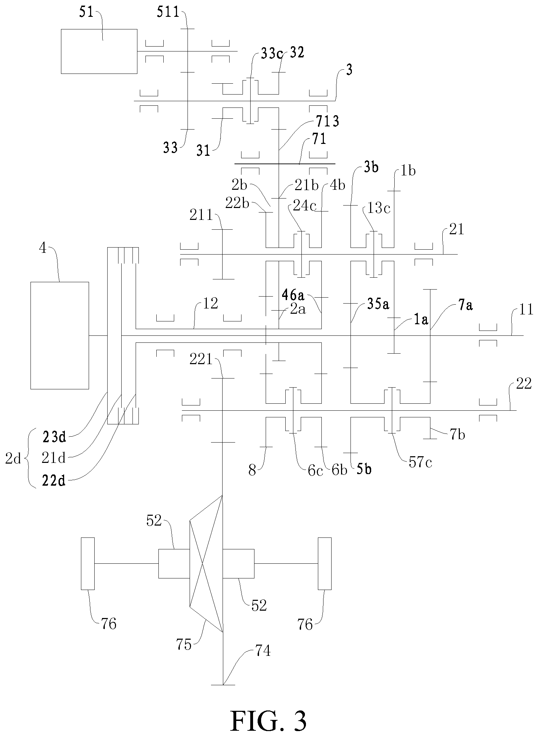

Further, a motor power shaft synchronizer 33c is arranged on the motor power shaft 3. The motor power shaft synchronizer 33c is located between the motor-power-shaft first gear 31 and the motor-power-shaft second gear 32. The motor power shaft synchronizer 33c may be selectively engaged with the motor-power-shaft first gear 31 or the motor-power-shaft second gear 32, so that the motor-power-shaft first gear 31 or the motor-power-shaft second gear 32 is in linkage with the motor power shaft 3. For example, in an example of FIG. 2, the engagement sheath of the motor power shaft synchronizer 33c may be engaged with the motor-power-shaft second gear 32 when moved leftwards, and may be engaged with the motor-power-shaft first gear 31 when moved rightwards. However, in examples of FIG. 3 to FIG. 5, the engagement sheath of the motor power shaft synchronizer 33c may be engaged with the motor-power-shaft first gear 31 when moved leftwards, and may be engaged with the motor-power-shaft second gear 32 when moved rightwards.

Similarly, as shown in FIG. 2 to FIG. 5, the first motor generator 51 is arranged to be capable of being in linkage with the motor power shaft 3. For example, when the first motor generator 51 works as an electromotor, generated power may be output to the motor power shaft 3. For another example, when the first motor generator 51 works as a generator, the power transmitted through the motor power shaft 3 may be output to the first motor generator 51, and therefore the first motor generator 51 is driven to generate electricity.

Herein, what needs to be explained is that in the description related to the "motor generator" in the embodiments of the present disclosure, unless otherwise specially illustrated, the motor generator may be understood as a motor having functions of the generator and the electromotor.

As mentioned above, the motor-power-shaft second gear 32 is suitable for being in linkage with one gear driven gear, and when the motor-power-shaft second gear 32 is in linkage with the gear driven gear, the first motor generator 51 can utilize at least part of power output from the engine 4 to generate electricity during vehicle driving and parking.

In other words, when the vehicle is in a driving state and the motor-power-shaft second gear 32 is in linkage with the gear driven gear, at least part of the power of the engine 4 may be output to the first motor generator 51 through the gear driven gear, the motor-power-shaft second gear 32 and the motor power shaft 3, and therefore the first motor generator 51 is driven to generate electricity, and a work condition that the engine 4 performs driving and charging at the same time is achieved.

When the vehicle is in a parking state (the vehicle stops, but the engine 4 is stilled in a work state, for example, the engine 4 idles) and the motor-power-shaft second gear 32 is in linkage with the gear driven gear, at least part of the power of the engine 4 may be output to the first motor generator 51 through the gear driven gear, the motor-power-shaft second gear 32 and the motor power shaft 3, and therefore the first motor generator 51 is driven to generate electricity, a parking charging function (namely, "parking" charging) is achieved, and in this way, charging efficiency and fuel economy of the engine 4 may be greatly improved.

For the motor-power-shaft first gear 31, because the motor-power-shaft first gear 31 is meshed with the main reducer driven gear 74, the first motor generator 51 may be engaged with the motor-power-shaft first gear 31 through the motor power shaft synchronizer 33c so as to directly output generated power from the motor-power-shaft first gear 31, and in this way, a transmission chain may be shortened, intermediate transmission parts are reduced, and transmission efficiency is improved.

What needs to be illustrated is that in the description of the present disclosure, the motor power shaft 3 may be a motor shaft of the first motor generator 51. Of course, what may be understood is that the power motor shaft 3 and the motor shaft of the first motor generator 51 may also be two independent shafts.

The power driving shaft 100 according to the embodiments of the present disclosure can achieve a charging function during vehicle driving and parking, enriches charging modes, and solves the problems that an existing power transmission system is singular in charging manner, low in charging efficiency and the like at least to a certain extant. In short, the power driving shaft 100 according to the embodiments of the present disclosure can achieve two charging modes of vehicle driving charging and parking charging. Besides, the power driving shaft 100 according to the embodiments of the present disclosure has seven forward gears, which makes power transmission be smoother, the transmission efficiency is high, and the seven different transmission speed ratios can better meet the requirements of the vehicle for power and torque under different road conditions.

A specific structure of the power drive system 100 is described in detail below in combination with the specific embodiments with reference to FIG. 1 to FIG. 5.

Firstly, a transmission manner of the motor power shaft 3 and the gear driven gear is described in detail in combination with the specific embodiments.

In some embodiments of the present disclosure, as shown in FIG. 2, the power drive system 100 further includes an intermediate shaft 71, and the intermediate shaft 71 is fixedly provided with an intermediate-shaft first gear 711 and an intermediate-shaft second gear 712. The intermediate-shaft first gear 711 is meshed with one gear driven gear (such as, the second-gear driven gear 2b), and the intermediate-shaft second gear 712 is meshed with the motor-power-shaft second gear 32. In short, in the embodiments, the motor-power-shaft second gear 32 is in linkage with the gear driven gear through the intermediate-shaft second gear 712 and the intermediate-shaft first gear 711.

In some other embodiments, as shown in FIG. 3, only an intermediate-shaft third gear 713 is fixedly arranged on the intermediate shaft 71, and the motor-power-shaft second gear 32 is in transmission with the gear driven gear (such as, the second-gear driven gear 2b) through the intermediate-shaft third gear 713.

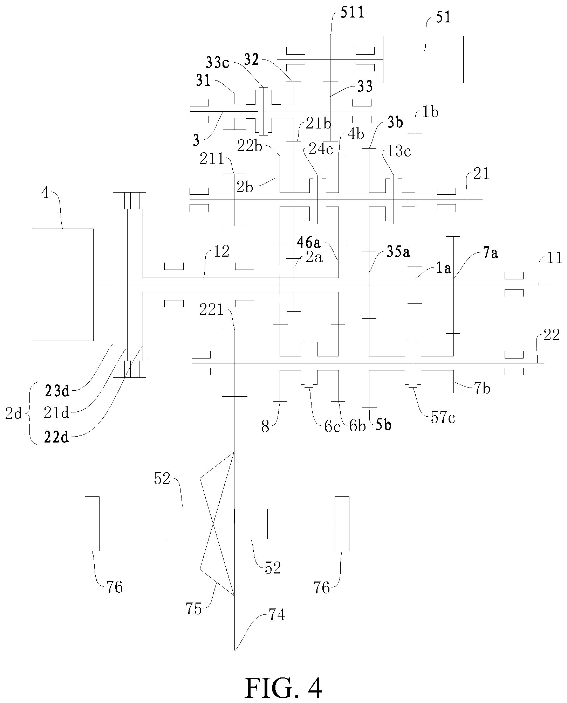

In still some other embodiments, as shown in FIG. 4 to FIG. 5, the motor-power-shaft second gear 32 and the gear driven gear (such as, the second-gear driven gear 2b) are in direct meshing transmission.

Secondly, a transmission manner of the motor power shaft 3 and the first motor generator 51 is illustrated in detail in combination with the specific embodiments.

In some embodiments, as shown in FIG. 2 to FIG. 4, a motor-power-shaft third gear 33 is further fixedly arranged on the motor power shaft 3, and the first motor generator 51 is arranged to be in direct meshing transmission or indirect transmission with the motor-power-shaft third gear 33.

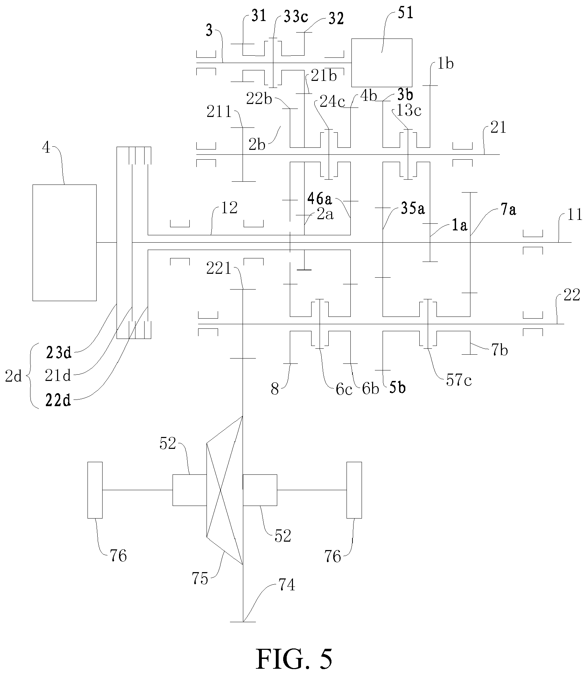

Further, as shown in FIG. 2, a first motor gear 511 is arranged on the motor shaft of the first motor generator 51, and the first motor gear 511 is in transmission with the motor-power-shaft third gear 33 through an intermediate gear 512. For another example, in examples of FIG. 3 to FIG. 4, the first motor gear 511 is arranged on the motor shaft of the first motor generator 51, and is directly meshed with the motor-power-shaft third gear 33. For still another example, in an example of FIG. 5, the first motor generator 51 and the motor power shaft 3 may also be coaxially connected, and in other words, the motor power shaft 3 is the motor shaft of the first motor generator 51.

The input shaft, the output shaft and the gear gear pair are described in detail below in combination with the embodiments of FIG. 1 to FIG. 5.

In some embodiments of the present disclosure, as shown in FIG. 1 to FIG. 5, two input shafts, namely a first input shaft 11 and a second input shaft 12, may be arranged, the second input shaft 12 may be a hollow shaft, the first input shaft 11 may be a solid shaft, a part of the first input shaft 11 may be embedded in the hollow second input shaft 12, another part of the first input shaft 11 may extend outwards from the interior of the second input shaft 12 in an axial direction, and the first input shaft 11 and the second input shaft 12 may be coaxially arranged.

Two output shafts, namely a first output shaft 21 and a second output shaft 22, may be arranged, the first output shaft 21 and the second output shaft 22 are arranged in parallel with the input shaft, and the first output shaft 21 and the second output shaft 22 may both solid shafts.

The power driving shaft 100 according to the embodiments of the present disclosure may have seven forward gears, gear driving gears with gears of odd numbers may be arranged on one input shaft such as the first input shaft 11, gear driving gears with gears of even numbers may be arranged on another input shaft such as the second input shaft 12, and therefore the first input shaft 11 is responsible for power transmission of gear gear pairs with gears of odd numbers, and the second input shaft 12 is responsible for power transmission of gear gear pairs with gears of even numbers. In addition, in some embodiments of the present disclosure, in the plurality of gear driving gears, at least one gear driving gear is in meshing transmission with two gear driven gears, that is, at least one gear driving gear is shared by the two gear driven gears, and therefore the number of the gear driving gear may be reduced, the axial size of the power drive system is reduced, and arrangement is convenient.

As shown in FIG. 1, the first-gear driving gear 1a, the third and fifth-gear driving gear 35a and the seventh-gear driving gear 7a may be arranged on the first input shaft 11, the second-gear driving gear 2a and the fourth- and sixth-gear driving gear 46a may be arranged on the second input shaft 12, and each gear driving gear and a corresponding input shaft rotate synchronously.

Correspondingly, as shown in FIG. 1, the first-gear driven gear 1b, the second-gear driven gear 2b, the third-gear driven gear 3b and the fourth-gear driven gear 4b are arranged on the first output shaft 21, the fifth-gear driven gear 5b, the sixth-gear driven gear 6b and the seventh-gear driven gear 7b are arranged on the second output shaft 22, and each gear driven gear is idly mounted on a corresponding output shaft, that is, each gear driven gear can rotate differentially relative to the corresponding output shaft.

The first-gear driven gear 1b and the first-gear driving gear 1a are meshed so as to form a first-gear gear pair, the second-gear driven gear 2b and the second-gear driving gear 2a are meshed so as to form a second-gear gear pair, the third-gear driven gear 3b and the third- and fifth-gear driving gear 35a are meshed so as to form a third-gear gear pair, the fourth-gear driven gear 4b and the fourth- and sixth-gear driving gear 46a are meshed so as to form a fourth-gear gear pair, the fifth-gear driven gear 5b and the third- and fifth-gear driving gear 35a are meshed so as to form a fifth-gear gear pair, the sixth-gear driven gear 6b and the fourth- and sixth-gear driving gear 46a are meshed so as to form a sixth-gear gear pair, and the seventh-gear driven gear 7b is meshed with the seventh-gear driving gear 7a so as to form a seventh-gear gear pair.

The fourth-gear gear pair and the sixth-gear gear pair share the fourth- and sixth-gear driving gear 46a, the third-gear gear pair and the fifth-gear gear pair share the third- and fifth-gear driving gear 35a, and therefore two gear driving gears may be reduced, and the power drive system 100 is more compact in structure and smaller in axial size.

Due to the fact that the driven gear is idly mounted on the output shaft, it is needed to arrange the synchronizer to synchronize the driven gear and the corresponding output shaft, so as to achieve power output.

In some embodiments, in combination with what is shown in FIG. 1, the power drive system 100 includes a first- and third-gear synchronizer 13c, a second- and fourth-gear synchronizer 24c, a fifth- and seventh-gear synchronizer 57c and the sixth-gear synchronizer 6c.

As shown in FIG. 1, the first- and third-gear synchronizer 13c is arranged on the first output shaft 21 and located between the first-gear driven gear 1b and the third-gear driven gear 3b, and may be used for jointing the first-gear driven gear 1b or the third-gear driven gear 3b with the first output shaft 21, and therefore the driven gear and the first output shaft 21 can synchronously rotate.

For example, in combination with what is shown in FIG. 1, when an engagement sheath of the first- and third-gear synchronizer 13c is moved leftwards, the third-gear driven gear 3b may be engaged with the first output shaft 21, and therefore the third-gear driven gear 3b and the first output shaft 21 can synchronously rotate. When the engagement sheath of the first- and third-gear synchronizer 13c is moved rightwards, the first-gear driven gear 1b may be engaged with the first output shaft 21, and therefore the first-gear driven gear 1b and the first output shaft 21 can synchronously rotate.

As shown in FIG. 1, similarly, the second- and fourth-gear synchronizer 24c is arranged on the first output shaft 21 and located between the second-gear driven gear 2b and the fourth-gear driven gear 4b, the second-gear driven gear 2b or the fourth-gear driven gear 4b may be engaged with the first output shaft 21 through the second- and fourth-gear synchronizer 24c, and therefore the driven gear and the first output shaft 21 can synchronously rotate.

For example, in combination with what is shown in FIG. 1, when an engagement sheath of the second- and fourth-gear synchronizer 24c is moved leftwards, the second-gear driven gear 2b may be engaged with the first output shaft 21, and therefore the second-gear driven gear 2b and the first output shaft 21 rotate synchronously. When the engagement sheath of the second- and fourth-gear synchronizer 24c is moved rightwards, the fourth-gear driven gear 4b may be engaged with the first output shaft 21, and therefore the fourth-gear driven gear 4b and the first output shaft 21 synchronously rotate.

As shown in FIG. 1, similarly, the fifth- and seventh-gear synchronizer 57c is arranged on the second output shaft 22, and is located between the fifth-gear driven gear 5b and the seventh-gear driven gear 7b, and the fifth- and seventh-gear synchronizer 57c is used for jointing the fifth-gear driven gear 5b or the seventh-gear driven gear 7b with the second output shaft 22. For example, when an engagement sheath of the fifth- and seventh-gear synchronizer 57c is moved rightwards, the seventh-gear driven gear 7b may be engaged with the second output shaft 22, and therefore the seventh-gear driven gear 7b and the second output shaft 22 rotate synchronously. For another example, when the engagement sheath of the fifth- and seventh-gear synchronizer 57c is moved leftwards, the fifth-gear driven gear 5b is engaged with the second output shaft 22, and therefore the fifth-gear driven gear 5b and the second output shaft 22 rotate synchronously.

As shown in FIG. 1, similarly, the sixth-gear synchronizer 6c is arranged on the second output shaft 22, and is located on one side, such as the left side, of the sixth-gear driven gear 6b. The sixth-gear synchronizer 6c is used for jointing the sixth-gear driven gear 6b with the second output shaft 22. For example, when an engagement sheath of the sixth-gear synchronizer 6c is moved rightwards, the sixth-gear driven gear 6b may be engaged with the second output shaft 22, and therefore the sixth-gear driven gear 6b and the second output shaft 22 rotate synchronously.

As shown in FIG. 1, the reverse gear output gear 8 and the sixth-gear driven gear 6b are adjacently arranged so as to share the sixth-gear synchronizer 6c, and therefore the sixth-gear synchronizer 6c forms the reverse gear synchronizer. In combination with what is shown in FIG. 1 to FIG. 5, when an engagement sheath of the sixth-gear synchronizer 6c is moved leftwards, the reverse gear output gear 8 may be engaged with the second output shaft 22, and when the engagement sheath of the sixth-gear synchronizer 6c is moved rightwards, the sixth-gear driven gear 6b may be engaged with the second output shaft 22. In some embodiments of the present disclosure, the reverse gear output gear 8 is located on one side, close to the engine 4, of the sixth-gear driven gear 6b.

In some embodiments, as shown in FIG. 1, distances between the second-gear driving gear 2a, the fourth- and sixth-gear driving gear 46a, the third- and fifth-gear driving gear 35a, the first-gear driving gear 1a and the seventh-gear driving gear 7a and the engine 4 are progressively increased. Thus, gear arrangement is more reasonable, and the power drive system 100 is more compact and smaller in radial and axial size.

In some embodiments of the present disclosure, the engine 4 and the first input shaft 11 and the second input shaft 12 of the transmission may perform power transmission or separation through a double clutch 2d.

Referring to what is shown in FIG. 1 to FIG. 5, the double clutch 2d has an input end 23d, a first output end 21b and a second output end 22d, and the engine 4 is connected with the input end 23d of the double clutch 2d. For example, the engine 4 may be connected with the input end 23d of the double clutch 2d in various manners such as a flywheel, a shock absorber or a twisting disk.

The first output end 21d of the double clutch 2d is connected with the first input shaft 11, and therefore the first output end 21d and the first input shaft 11 rotate synchronously. The second output end 22d of the double clutch 2d is connected with the second input shaft 12, and therefore the second output end 22d and the second input shaft 12 rotate synchronously.

The input end 23d of the double clutch 2d may be a shell of the double clutch 2d, and the first output end 21d and the second output end 22d can be two driven disks. Generally, the shell may be disconnected from both of the two driven disks, that is, the input end 23d is disconnected from both the first output end 21d and the second output end 22d. When the input end 23d needs to be engaged with one of the driven disks, the shell may be controlled to be engaged with the corresponding driven disk and therefore synchronous rotation is achieved, that is, the input end 23d is engaged with one of the first output end 21d and the second output end 22d, and then power transmitted from the input end 23d may be output through one of the first output end 21d and the second output end 22d.

In some embodiments of the present disclosure, the shell may also be engaged with the two driven disks at the same time, that is, the input end 23d may also be engaged with the first output end 21d and the second output end 22d at the same time, and therefore the power transmitted from the input end 23d may be output through the first output end 21d and the second output end 22d at the same time.

What should be understood is that a specific jointing state of the double clutch 2d is affected by a control policy, for those skilled in the art, the control policy may be set adaptively according to an actually required transmission mode, and therefore various modes that the input end 23d is disconnected from both of the two output ends and the input end 23d is engaged with at least one of the two output ends may be switched.

Connection relationships between three power output shafts (namely, the first output shaft 21, the second output shaft 22 and the motor power shaft 3) and a vehicle differential 75 are described in detail below in combination with FIG. 1 to FIG. 5.

The differential 75 of the vehicle may be arranged between a pair of front wheels 76 or a pair of rear wheels. In some examples of the present disclosure, the differential 75 is located between the pair of front wheels 76. The differential 75 is used for making left and right driving wheels roll at different angular speeds when the vehicle is driving for turning or is driving on an uneven road surface, so as to guarantee that the driving wheels on left and right sides do pure rolling motion on ground. The main reducer driven gear 74 is arranged on the differential 75, for example, the main reducer driven gear 74 may be arranged on a shell of the differential 75. The main reducer driven gear 74 may be a bevel gear, but is not limited herein.

Further, a first-output-shaft output gear 211 is fixedly arranged on the first output shaft 21, and rotates synchronously along with the first output shaft 21, and the first-output-shaft output gear 211 and the main reducer driven gear 74 are in meshing transmission, and therefore power transmitted through the first output shaft 21 can be transmitted to the main reducer driven gear 74 and the differential 75 from the first-output-shaft output gear 211.

Similarly, a second-output-shaft output gear 221 is fixedly arranged on the second output shaft 22, and synchronously rotates along with the second output shaft 22, the second-output-shaft output gear 221 and the main reducer driven gear 74 are in meshing transmission, and therefore power transmitted through the second output shaft 22 can be transmitted to the main reducer driven gear 74 and the differential 75 from the second-output-shaft output gear 221.

Similarly, the motor-power-shaft first gear 31 may be used for outputting power transmitted through the motor power shaft 3, and therefore the motor-power-shaft first gear 31 is also in meshing transmission with the main reducer driven gear 74.

Some typical work conditions of the power drive system 100 according to the embodiments of the present disclosure include parking electricity generating, a mode that driving and charging are achieved at the same time under the circumference that the double clutch 2d is jointed at the same time, and a reverse gear mode.

Firstly, the typical work condition of parking electricity generating is described. When the vehicle is in a parking state, the engine 4 is arranged to output the generated power to the gear driven gear which is in linkage with the motor-power-shaft second gear 32, and the motor-power-shaft second gear 32 and the motor power shaft 3 are synchronized through the motor power shaft synchronizer 33c, and therefore the power is output to the first motor generator 51 to drive the first motor generator 51 to generate electricity.

In combination with the embodiment as shown in FIG. 2, the engine 4 can output power to the second input shaft 12 through the double clutch 2d after parking, and the motor power shaft synchronizer 33c is engaged with the motor-power-shaft second gear 32, so that the motor-power-shaft second gear 32 is synchronized with the motor power shaft 3, and therefore the power transmitted through the second input shaft 12 may be output to the first motor generator 51 through the second-gear gear pair, the intermediate-shaft first gear 711, the intermediate shaft 71, the intermediate-shaft second gear 712, the motor-power-shaft second gear 32, the motor power shaft synchronizer 33c, the motor power shaft 3, the motor-power-shaft third gear 33, the intermediate gear 512 and the first motor gear 511, and therefore the first motor generator 51 is driven to serve as a generator to generate electricity.

Thus, the parking electricity generating function is achieved, charging modes are enriched, the vehicle is in a static state in a parking electricity generating work condition, the power of the engine 4 may be all used for charging, the charging efficiency is improved, and a fast charging function is achieved.

Secondly, the work condition that driving and charging are achieved at the same time under the circumference that the input end 23d of the double clutch 2d is engaged with the first output end 21d and the second output end 22d at the same time is described. Under the work condition, due to the fact that the input end 23d of the double clutch 2d is engaged with the first output end 21d and the second output end 22d at the same time, the engine 4 can output part of power to wheels through one output shaft to serve as power for driving of the vehicle, and outputs the other part of power to the first motor generator 51 through the motor-power-shaft second gear 32 so as to drive the first motor generator 51 to generate electricity.

In combination with the embodiment as shown in FIG. 3, under the work condition, the motor power shaft synchronizer 33c is engaged with the motor-power-shaft second gear 32, part of the power of the engine 4 may be output to the first input shaft 11 and then is output through the first-gear gear pair, the third-gear gear pair and the fifth-gear gear pair or the seventh-gear gear pair, the other part of the power of the engine 4 may be output to the first motor generator 51 by means of the second input shaft 12, the second-gear gear pair and the motor-power-shaft second gear 32, and therefore the first motor generator 51 is driven to generate electricity.

Due to the fact that in a traditional power transmission system with the double clutch 2d, only one clutch of the double clutch 2d is in a work state at the same moment, the power drive system 100 according to the embodiments of the present disclosure achieves breakthrough application of the double clutch 2d, that is, under the circumference that the two clutches of the double clutch 2d are both in a jointed state (that is, the input end 23d is engaged with the first output end 21d and the second output end 22d at the same time), part of the power of the engine 4 is output from one output shaft (such as the first output shaft 21 or the second output shaft 22) so as to drive the vehicle to drive, the other part of the power is output to the first motor generator 51, the motor generator 51 is driven to generate electricity, the transmission modes are enriched, and vehicle driving and charging requirements are both given into consideration.

Secondly, the reverse gear mode is described. The power drive system 100 according to the embodiments of the present disclosure has a mechanical reverse gear mode, an electric reverse gear mode and a hybrid reverse gear mode.

The mechanical reverse gear mode achieves a backing function of the vehicle by utilizing the power of the engine 4. When the vehicle is in the mechanical reverse gear mode, the engine 4 serves as the power source to output the generated power to the reverse gear output gear 8 through the second-gear driving gear 2a and the second-gear driven gear 2b (a duplicate gear).

For example, in combination with an example as shown in FIG. 1, the sixth-gear synchronizer 6c is engaged with the reverse gear output gear 8, so that the reverse gear output gear 8 and the second output shaft 22 are synchronous, and the power generated by the engine 4 is output to the reverse gear output gear 8 through the second input shaft 12, the second-gear driving gear 2a and the second-gear driven gear 2b (the duplicate gear). Due to a jointing effect of the reverse gear synchronizer 6c, the reverse gear output gear 8 is in linkage with the second output shaft 22, and therefore reverse gear power may be finally output from the second output shaft 22.

In short, when the vehicle is in the mechanical reverse gear mode, as shown in FIG. 2, only the reverse gear synchronizer 6c is engaged with the reverse gear output gear 8. In this case, a transmission chain is short, intermediate transmission parts are few, and reverse gear efficiency is high.

The electric reverse gear mode achieves the backing function of the vehicle by utilizing the first motor generator 51. When the vehicle is in the electric reverse gear mode, the first motor generator 51 serves as the power source and the motor power shaft synchronizer 33c is engaged with the motor-power-shaft first gear 31, so that the motor-power-shaft first gear 31 is synchronous with the motor power shaft 3, and therefore the power generated by the first motor generator 51 is output from the motor-power-shaft first gear 31, and backing is achieved.

In combination with the embodiment of the FIG. 2, the motor power shaft synchronizer 33c is engaged with the motor-power-shaft first gear 31c, and the power output from the first motor generator 51 is output to the motor-power-shaft first gear 31 through the first motor gear 511, the intermediate gear 512, the motor-power-shaft third gear 33, the motor power shaft 3 and the motor power shaft synchronizer 33c, and is further output by the motor-power-shaft first gear 31.

In this case, a transmission chain is short, intermediate transmission parts are few, and reverse gear efficiency is high, which may be thought as a direct reverse gear path of the first motor generator 51.

In short, under the electric reverse gear mode, only the motor power shaft synchronizer 33c is engaged with the motor-power-shaft first gear 31.

The hybrid reverse gear mode achieves the backing function of the vehicle by utilizing the engine 4 and the first motor generator 51 at the same time. The hybrid reverse gear mode is a combination of the above mechanical reverse gear mode and electric reverse gear mode.

When the vehicle is in the hybrid reverse gear mode, the engine 4 serves as the power source and outputs the generated power to the second-gear driven gear 2b (the duplicate gear), and the reverse gear synchronizer synchronize the reverse gear output gear 8 and the second output shaft 22, and therefore the power generated by the engine 4 is output from the second output shaft 22.

At the same time, the first motor generator 51 also serves as the power source and the motor power shaft synchronizer 33c synchronizes the first gear 31 and the motor power shaft 3, and therefore power generated by the first motor generator is output from the motor-power-shaft first gear 31.

As shown in FIG. 2, when the power drive system 100 is in the hybrid reverse gear mode, the above mechanical reverse gear mode and the above electric reverse gear mode are combined, the engine 4 outputs the reverse gear power from the second output shaft 22 according to the above mechanical reverse gear mode, the first motor generator 51 outputs the reverse gear power from the motor-power-shaft first gear 31 according to the above electric reverse gear mode, after being coupled at a position of the main reducer driven gear 74, the two parts of power is jointly output to the wheels, and hybrid backing is achieved.

At the moment, the first motor generator 51 can perform speed adjusting, which makes the main reducer driven gear 74 synchronously receive power from the engine 4 and the first motor generator 51 in a balanced manner, and transmission smoothness and coordination are improved.

In short, in the hybrid mode, as shown in FIG. 2, the motor power shaft synchronizer 33c is engaged with the motor-power-shaft first gear 31 and the reverse gear synchronizer 6c is engaged with the reverse gear output gear 8.

Thus, the power drive system 100 according to the embodiments of the present disclosure can achieve three reverse gear modes, namely, the mechanical reverse gear mode, the electric reverse gear mode and the hybrid reverse gear mode, the reverse gear work conditions are enriched, the three reverse gear modes may be flexibly switched according to actual conditions, and driving requirements are met.

For example, under the circumference that a vehicle battery is sufficient in charge, the electric reverse gear mode may be adopted, no harmful gas is emitted during backing, and energy consumption can also be lowered. Especially for a new driver to back the vehicle into a parking space, the vehicle can be backed into an assigned position by multiple times of operation, the engine 4 can generate lots of harmful gas during low-speed backing, meanwhile, the engine 4 generally works in a non-economic rotating speed area during backing, and oil consumption is relatively high. Thus, the electric reverse gear mode is adopted and may well solve the problem, emission can be reduced, meanwhile, the motor is adopted as power so that low-speed backing can be achieved at low energy consumption, and certain improvement is achieved for fuel economy of the engine 4.

For another example, under the circumference that the vehicle battery is insufficient or low in charge, the mechanical reverse gear mode can be adopted. For still another example, under work conditions that high-speed backing or large-power backing or the like is needed, the hybrid reverse gear mode may be adopted, power performance of the vehicle is improved, and backing is convenient.

Of course, the description related to application environments of the three reverse gear modes is only exemplary, and cannot be understood as limitation to the present disclosure or does not hint that the vehicle must adopt the above corresponding backing mode under the above environments. For those skilled in the art, it is obvious to specially set a reverse gear mode needed under the corresponding reversing environment according to requirements or actual conditions.

Thus, the reverse gear modes of the power drive system 100 are further enriched, more choices are provided for a driver, the driving enjoyment is fully improved, and reverse gear requirement for different road conditions are better met.

The power drive system 100 according to some embodiments of the present disclosure, as shown in FIG. 1 to FIG. 5, a second motor generator 52 may also be additionally arranged to improve the power performance of the power drive system 100 and enrich the transmission mode.

For example, in some embodiments, the second motor generator 52 may be in transmission with the main reducer driven gear 74, and for example, a gear may be arranged on a motor shaft of the second motor generator 52, and the gear and the main reducer driven gear 74 are in direct meshing transmission. For another example, in some other embodiments, the second motor generator 52 may also be arranged to be connected with the first input shaft 11 or connected with the first output shaft 21. For still another example, in some more embodiments, two second motor generators 52 are arranged and arranged on two sides of the differential 75 respectively, and the two motor generators 52 may be integrated with the differential 75. In some embodiments of the present invention, the above engine 4 and the first motor generator 51 are used for driving the front wheels, the second motor generator 52 may be a wheel motor and is used for driving the rear wheels or the second motor generator 52 may drive the two rear wheels through one reducing mechanism, or two motor generators 52 are arranged and each drive one rear wheel through one reducing mechanism.

FIG. 1 shows a basic embodiment of the power drive system 100 according to the embodiment of the present disclosure. The embodiments in FIG. 2 to FIG. 5 are variants of the embodiment in FIG. 1, and compared with the embodiment in FIG. 1, a difference lies in that the first motor generator 51 is added. A mutual difference among the four embodiments in FIG. 2 to FIG. 5 lies in different power connection manners between the first motor generator 51 and the second-gear driven gear 2b.

In addition, in each embodiment of FIG. 2 to FIG. 5, the first motor generator 51 is in power connection with the second-gear driven gear 2b. However, what needs to be explained is that the first motor generator 51 may also be in power connection with the first-gear driven gear 1b, the third-gear driven gear 3b or the fourth-gear driven gear 4b (the specific embodiments are not shown).

In addition, an embodiment of the present disclosure further provides a vehicle including the power drive system 100 as mentioned above. It should be noted that other components of the vehicle according this embodiment of the present disclosure such as a driving system, a steering system, and a braking system are all existing technologies well known to a person of ordinary skill in the art, and therefore detailed descriptions of such known structures are omitted herein.

In the descriptions of this specification, descriptions of reference terms "one embodiment", "some embodiments", "an example", "a specific example", or "some examples" are intended to indicate that particular features, structures, materials, or characteristics described with reference to the embodiment or example are included in at least one embodiment or example of the present disclosure. In this specification, schematic descriptions of the foregoing terms do not need to aim at a same embodiment or example. Besides, the specific features, the structures, the materials or the characteristics that are described may be combined in a proper manner in any one or more embodiments or examples. In addition, those skilled in the art may joint or combine different embodiments or examples described in the specification.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A power drive system, comprising:
an engine;
a plurality of input shafts, the engine is arranged to be selectively engaged with at least one of the plurality of input shafts, and each input shaft is provided with a plurality of gear driving gears; and
a plurality of output shafts, each output shaft is provided with a plurality of gear driven gears, the plurality of gear driven gears and the plurality of gear driving gears are correspondingly meshed, a reverse gear output gear is mounted on one of the plurality of output shafts, and the one of the plurality of output shafts is further provided with a reverse gear synchronizer used for being engaged with the reverse gear output gear, one side of one gear driven gear of the plurality of gear driven gears is provided with a gear portion to form a duplicate gear, and the reverse gear output gear is meshed with the gear portion.

2. The power drive system according to claim 1, wherein,
the plurality of input shafts comprises: a first input shaft and a second input shaft, the second input shaft is sleeved over the first input shaft;
the plurality of output shafts comprises: a first output shaft and a second output shaft;
the first input shaft is fixedly provided with a first-gear driving gear, a third- and fifth-gear driving gear and a seventh-gear driving gear, and the second input shaft is fixedly provided with a second-gear driving gear and a fourth- and sixth-gear driving gear;
a first-gear driven gear, a second-gear driven gear, a third-gear driven gear and a fourth-gear driven gear are idly mounted on the first output shaft, and a fifth-gear driven gear, a sixth-gear driven gear and a seventh-gear driven gear are idly mounted on the second output shaft; and
a first- and third-gear synchronizer is arranged between the first-gear driven gear and the third-gear driven gear, a second- and fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged on one side of the sixth-gear driven gear.

3. The power drive system according to claim 2, wherein the reverse gear output gear is idly mounted on the second output shaft and is adjacent to the sixth-gear driven gear, and shares the sixth-gear synchronizer with the sixth-gear driven gear, and therefore the sixth-gear synchronizer forms the reverse gear synchronizer.

4. The power drive system according to claim 2, wherein the first output shaft is fixedly provided with a first-output-shaft output gear, the second output shaft is fixedly provided with a second-output-shaft output gear, and the first-output-shaft output gear and the second-output-shaft output gear are both meshed with a main reducer driven gear of a vehicle.

5. The power drive system according to claim 2, further comprising: a double clutch, the double clutch has an input end, a first output end and a second output end, the engine is connected with the input end, the first output end is connected with the first input shaft, and the second output end is connected with the second input shaft.

6. The power drive system according to claim 2, wherein the gear portion is arranged on one side of the second-gear driven gear so as to form the duplicate gear.

7. The power drive system according to claim 1, wherein, the reverse gear output gear shares a gear synchronizer with one gear driven gear, adjacent to the reverse gear output gear, in the plurality of gear driven gears, and the shared gear synchronizer forms the reverse gear synchronizer.

8. The power drive system according to claim 2, wherein, distances between the second-gear driving gear, the fourth- and sixth-gear driving gear, the third- and fifth-gear driving gear, the first-gear driving gear and the seventh-gear driving gear and the engine are progressively increased.

9. The power drive system according to claim 1, further comprising:
a motor power shaft, a motor-power-shaft first gear and a motor-power-shaft second gear are idly mounted on the motor power shaft, a motor power shaft synchronizer located between the motor-power-shaft first gear and the motor-power-shaft second gear is further arranged on the motor power shaft, wherein the motor-power-shaft second gear is arranged to be in linkage with one gear driven gear in the plurality of gear driven gears; and
a first motor generator, the first motor generator is arranged to be in linkage with the motor power shaft.

10. A vehicle, comprising the power drive system according to any one of claims 1-9.
